# EUROPÄISCHE PATENTSCHRIFT

(11) **EP 1 094 236 B1**
(45) Veröffentlichungstag und Bekanntmachung des Hinweises auf die Patenterteilung: **07.09.2005**
(21) Anmeldenummer: 00122644.8
(22) Anmeldetag: 18.10.2000
(51) Int. Cl.: F16D 69/04, F16D 65/092

(54) **Bremsbacke**
Brake pad
Patin de frein

(30) Priorität: 20.10.1999 DE 19950518; 06.11.1999 DE 19953405
(43) Veröffentlichungstag der Anmeldung: 25.04.2001
(73) Patentinhaber: CWW-GERKO Akustik GmbH, 67547 Worms (DE)
(72) Erfinder: Freist, Christoph, Dr., 33613 Bielefeld (DE); Bildner, Karlheinz, 63589 Linsengericht-Grossenhausen (DE)
(74) Vertreter: Hebing, Norbert

(56) Entgegenhaltungen:
- EP-A- 0 619 354
- DE-A- 4 332 669
- DE-A- 19 522 889
- GB-A- 2 071 795
- US-A- 5 396 972

## Beschreibung

Die Erfindung betrifft eine Bremsbacke, welche eine Trägerplatte hat, gegen die mittels einer Klebeschicht Reibbelag geklebt ist und die einen Formschluss zwischen Reibbelag und Trägerplatte erzeugende Vorsprünge hat.

Eine Bremsbacke der vorstehenden Art ist Gegenstand der US 5 396 972 A1. Als Klebeschicht nennt die Schrift ein in einem Lösungsmittel enthaltenes, viskoses Gemisch mit synthetischem Nitrilkautschuk-Phenolharz einer Schichtdicke von 0,38 mm.

Das Dokument EP 0 619 354 A1 beschreibt auch schon eine Bindeschicht für Kupplungsbeläge und Bremsbeläge, bei der die Klebeschicht ein peroxidisch vernetzter Silikonkleber ist und eine Schichtdicke von 0,8 mm hat.

Die Klebeschicht, durch welche der Reibbelag mit der Trägerplatte verbunden ist, wird üblicherweise durch ein Klebepulver gebildet, welches vor dem Aufpressen des Reibbelages auf die Trägerplatte aufgebracht wird. Wie die DE 90 02 145.2 zeigt, ist es jedoch auch schon bekannt, als Klebeschicht eine 0,4 mm bis 1 mm Vliesstoff-Folie zu verwenden, welche von dem Kleber durchtränkt ist.

Die Praxis hat gezeigt, dass bei Bremsbacken der vorstehenden Art zusätzliche Mittel erforderlich sind, um Bremsgeräusche, insbesondere Quietschgeräusche, zu vermeiden. Gebräuchlich ist es beispielsweise, gegen die dem Reibbelag abgewandte Seite der Trägerplatte ein Dämpfblech zu kleben. Die hierzu verwendete Klebeschicht braucht im Gegensatz zur Klebeschicht zwischen dem Reibbelag und der Trägerplatte keine Scherkräfte zu übertragen und kann so abgestimmt sein, dass sie akustisch wirksam ist und Quietschgeräusche dämpft. Nachteilig ist es, dass das zusätzliche Dämpfblech die Kosten einer mit ihm versehenen Bremsbacke beträchtlich erhöht.

Eine andere Möglichkeit zur Unterdrückung von Quietschgeräuschen besteht darin, die Trägerplatte aus zwei aufeinandergeklebten Trägerplattenblechen zu bilden, was die DE 195 22 889 A1 zeigt. Überraschenderweise hatte sich bei solchen zweiteiligen Rückenplatten gezeigt, dass bereits eine 20 µm bis 200 µm dicke Klebstoffschicht aus einem peroxidisch vernetzten Silikonkleber zwischen den beiden Trägerplattenblechen genügt, um akustisch wirksam zu sein. Die DE 195 22 889 A1 lehrt zusätzlich, zur Entlastung der Klebstoffschicht die beiden Trägerplattenbleche durch Eindrückungen formschlüssig ineinandergreifen zu lassen. Nachteilig bei einer aus zwei Blechen gebildeten Trägerplatte ist genau wie bei einer Trägerplatte mit zusätzlichem Dämpfblech, dass gegenüber einer einfachen Trägerplatte die Herstellungskosten sich wesentlich erhöhen.

Der Erfindung liegt das Problem zugrunde, eine Bremsbacke der eingangs genannten Art so zu gestalten, dass mit möglichst geringem Aufwand beim Bremsen entstehende Schwingungen gedämpft werden.

Dieses Problem wird erfindungsgemäß dadurch gelöst, dass die Klebeschicht ein peroxidisch vernetzter Silikonkleber einer Schichtstärke von 20 µm bis 200 µm ist.

Durch die Vorsprünge der Trägerplatte wird die Klebeschicht vollständig von Scherkräften freigehalten. Dadurch ist sie in der Lage, Schwingungen sehr gut zu dämpfen, obgleich sie nur eine sehr geringe Schichtstärke hat. Durch den vernetzten Silikonkleber ergibt sich im Zusammenhang mit den Vorsprüngen eine gute Verbindung zwischen dem Reibbelag und der Trägerplatte, so dass ein Ablösen des Reibbelages nicht zu befürchten ist.

Besonders kostengünstig sind die Vorsprünge in einem Arbeitsgang beim Stanzen der Trägerplatten zu erzeugen, wenn gemäß einer vorteilhaften Weiterbildung die Vorsprünge durch einzelne, von ihrer Rückseite her in sie hineinführende Eindrückungen gebildet sind.

Alternativ ist es jedoch auch möglich, dass die Vorsprünge durch eine Wellung der Trägerplatte gebildet sind.

Die erfindungsgemäßen Vorsprünge in der Trägerplatte auf der Seite ihres Reibbelags lassen sich besonders kostengünstig erzeugen, wenn die Trägerplatte durch Gießen oder Schmieden erzeugt ist.

Außerhalb des Kraftangriffs des Bremszylinders wird die Trägerplatte beim Bremsen wesentlich geringer beansprucht als im Bereich des Kraftangriffs. Das kann man bei der Auslegung der Trägerplatte berücksichtigen und gemäß einer anderen Weiterbildung der Erfindung vorsehen, dass die Trägerplatte durch einen gekrümmten Verlauf ihrer Oberfläche zu den Rändern hin eine geringere Dicke hat als im mittleren Bereich.

Die Erfindung lässt verschiedene Ausführungsformen zu. Drei davon sind in der Zeichnung dargestellt und werden nachfolgend beschrieben. Diese zeigt in
- Fig.1: einen Schnitt durch eine erste Ausführungsform einer Bremsbacke nach der Erfindung,
- Fig.2: einen Schnitt durch eine zweite Ausführungsform einer erfindungsgemäßen Bremsbacke.

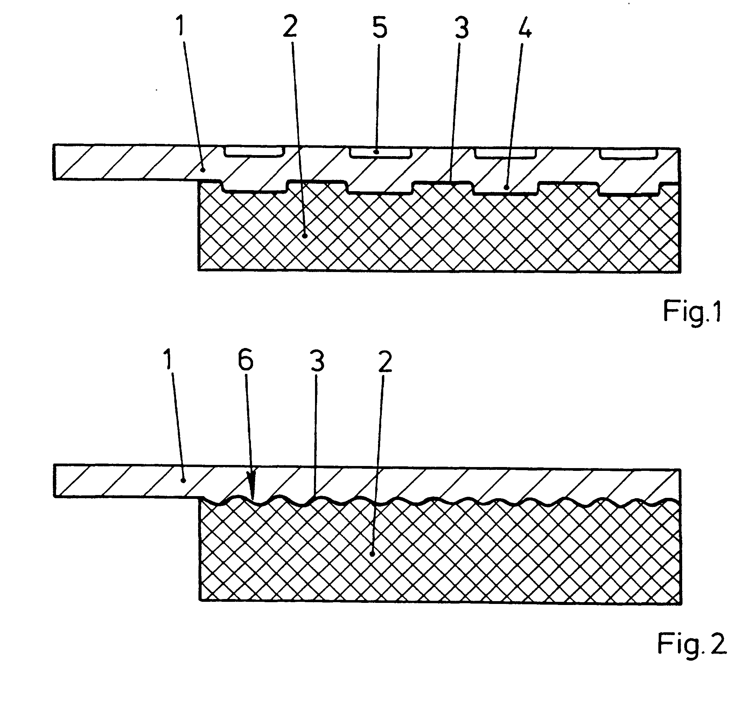

Die in den Figuren 1 und 2 dargestellte Bremsbacke besteht jeweils aus einer Trägerplatte 1 und einem Reibbelag 2, welcher durch eine Klebeschicht 3 mit der Trägerplatte 1 verbunden ist. Bei dieser Klebeschicht 3 handelt es sich um einen peroxidisch vernetzten Silikonkleber. Ihre Schichtstärke beträgt 20 µm bis 200 µm, vorzugsweise 75 µm bis 100 µm.

Die Trägerplatte 1 weist zum Reibbelag 2 hin Vorsprünge 4 auf, welche bei der Ausführungsform nach Figur 1 durch Eindrückungen 5 und bei der Ausführungsform nach Figur 2 durch eine Wellung 6 der Trägerplatte 1 gebildet sind. Wenn der Reibbelag 2 so weit verschlissen ist, dass die Vorsprünge 4 gegen die Bremsscheibe gelangen, dann werden diese Vorsprünge mit dem verbleibenden Reibbelag 2 abgeschliffen, so dass auch dann noch ein Bremsen möglich ist.

Die Trägerplatte kann auch so gestaltet sein, dass ihre Dicke durch einen gekrümmten Verlauf ihrer dem Bremszylinder zugewandten Rückseite zu den Rändern hin abnimmt. Eine solche Trägerplatte 1 kann sehr einfach durch Gießen oder Schmieden hergestellt werden.

## Patentansprüche

1. Bremsbacke, welche eine Trägerplatte hat, gegen die mittels einer Klebeschicht Reibbelag geklebt ist und die einen Formschluss zwischen Reibbelag (2) und Trägerplatte (1) erzeugende Vorsprünge (4) hat, **dadurch gekennzeichnet, dass** die Klebeschicht (3) ein peroxidisch vernetzter Silikonkleber einer Schichtstärke von 20 µm bis 200 µm ist.

2. Bremsbacke nach Anspruch 1, **dadurch gekennzeichnet, dass** die Vorsprünge (4) durch einzelne, von ihrer Rückseite her in sie hineinführende Eindrückungen (5) gebildet sind.

3. Bremsbacke nach Anspruch 1, **dadurch gekennzeichnet, dass** die Vorsprünge (4) durch eine Wellung (6) der Trägerplatte (1) gebildet sind.

4. Bremsbacke nach Anspruch 1, **dadurch gekennzeichnet, dass** die Trägerplatte (1) durch Gießen erzeugt ist.

5. Bremsbacke nach Anspruch 1, **dadurch gekennzeichnet, dass** die Trägerplatte (1) durch Schmieden erzeugt ist.

6. Bremsbacke nach zumindest einem der vorangehenden Ansprüche, **dadurch gekennzeichnet, dass** die Trägerplatte (1) durch einen gekrümmten Verlauf ihrer Oberfläche zu den Rändern hin eine geringere Dicke hat als im mittleren Bereich.

## Claims

1. A brake pad which has a support plate to which a friction layer is bonded by means of an adhesive layer and which has projections (4) which produce a positive contact between friction layer (2) and support plate (1), **characterised in that** the adhesive layer (3) is a peroxide cross-linked silicone adhesive having a layer thickness of 20 µm to 200 µm.

2. The brake pad according to claim 1, **characterised in that** the projections (4) are formed by individual impressions (5) which extend therein from its back side.

3. The brake pad according to claim 1, **characterised in that** the projections (4) are formed by a corrugation (6) of the support plate (1).

4. The brake pad according to claim 1, **characterised in that** the support plate (1) is produced by casting.

5. The brake pad according to claim 1, **characterised in that** the support plate (1) is produced by forging.

6. The brake pad according to at least one of the preceding claims, **characterised in that** the support plate (1) has a smaller thickness at the edges than it the central area as a result of a curved profile.

## Revendications

1. Mâchoire de freinage, comportant une plaque support contre laquelle est collée une garniture de frottement à l'aide d'une couche adhésive, et qui présente une conjugaison de forme entre la garniture de frottement (2) et les saillies (4) formant la plaque support (1), **caractérisée en ce que** la couche adhésive (3) est constituée d'une matière adhésive de silicone à réticulation de type peroxyde et a une épaisseur comprise entre 20 µm et 200 µm.

2. Mâchoire de frein selon la revendication 1, **caractérisée en ce que** les saillies (4) sont formées par des empreintes (5) individuelles, partant de leur côté arrière pour atteindre l'intérieur.

3. Mâchoire de frein selon la revendication 1, **caractérisée en ce que** les saillies (4) sont formées par une ondulation (6) de la plaque support (1).

4. Mâchoire de frein selon la revendication 1, **caractérisée en ce que** la plaque support (1) est fabriquée par coulée.

5. Mâchoire de frein selon la revendication 1, **caractérisée en ce que** la plaque support (1) est fabriquée par forgeage.

6. Mâchoire de frein selon l'une quelconque des revendications précédentes, **caractérisée en ce que** la plaque support (1), du fait d'une configuration incurvée de sa surface vers les bords, a une épaisseur inférieure à celle de la zone centrale.
